# EUROPÄISCHE PATENTSCHRIFT

(11) **EP 2 923 918 B1**
(45) Veröffentlichungstag und Bekanntmachung des Hinweises auf die Patenterteilung: **17.05.2017**
(21) Anmeldenummer: 15000549.4
(22) Anmeldetag: 26.02.2015
(51) Int. Cl.: B62D 1/10, B62D 1/19, B60R 21/015

(54) **INSASSENSCHUTZVORRICHTUNG FÜR EIN FAHRZEUG**
PASSENGER PROTECTION DEVICE FOR A VEHICLE
DISPOSITIF DE PROTECTION DES PASSAGERS POUR UN VÉHICULE

(30) Priorität: 28.03.2014 DE 102014004570
(43) Veröffentlichungstag der Anmeldung: 30.09.2015
(73) Patentinhaber: AUDI AG, 85045 Ingolstadt (DE)
(72) Erfinder: Lorenz, Stephan, DE - 80939 München (DE); Schütz, Ingo, DE - 85253 Erdweg (DE); Pfeiffer, Ulrich, DE - 85123 Karlskron / Probfeld (DE); Wilding, Werner, DE - 85137 Walting (DE); Tuschkan, Alwin, DE - 85049 Ingolstadt (DE)
(74) Vertreter: Engelhardt, Harald

(56) Entgegenhaltungen:
- EP-A1- 1 225 099
- EP-A1- 2 857 283
- DE-A1-102012 017 680
- DE-B4- 19 904 321
- JP-A- 2005 112 130
- US-A1- 2013 038 044

## Beschreibung

Die Erfindung betrifft eine Insassenschutzvorrichtung für ein Fahrzeug nach dem Oberbegriff des Patentanspruches 1 sowie ein Verfahren zur crashbedingten Ansteuerung eines Fahrzeug-Lenkrads mittels einer solchen Insassenschutzvorrichtung nach dem Patentanspruch 9.

Eine solche Insassenschutzvorrichtung weist in gängiger Praxis einen Lenkrad-Airbag auf. Im Crashfall wird dieser gezündet und dadurch eine Abstützung des sich nach vorne verlagernden Fahrers ermöglicht.

Aus dem Stand der Technik ist bekannt, ein Lenkradairbagmodul in einem Nabenbereich eines Fahrzeug-Lenkrads einzubauen. Gegebenenfalls kann das Lenkradairbagmodul mitsamt seinem Airbag mit dem Lenkrad drehgekoppelt sein.

Der Airbag kann im entfalteten Zustand in einer asymmetrischen Form ausgelegt sein, die der Körperform des Fahrers angepasst ist. Beispielhaft kann der Airbag eine Kopfabschnitt für den Kopfaufprall sowie einen Thoraxabschnitt für einen Thoraxaufprall aufweisen. Bei einer solchen asymmetrischen Auslegung des Airbags wird eine optimale Stützfunktion dann erzielt, wenn die Airbagabschnitte mit der Lage der dazu korrespondierenden Körperregionen des Fahrers übereinstimmen. Im obigen gattungsgemäßen Stand der Technik wird eine solche Übereinstimmung dann erzielt, wenn sich das Lenkrad in seiner Geradeausfahrt-Stellung befindet. In diesem Fall ist bei einer lagerichtigen Fahrer-Position eine optimale Stützfunktion im Crashfall erzielbar.

Aus der DE 199 04 321 B4 ist eine weitere Insassenschutzvorrichtung bekannt, bei der ein asymmetrischer Lenkrad-Airbag vorgesehen ist. Der Lenkrad-Airbag ist ebenfalls im Nabenbereich des Lenkrads angeordnet, jedoch drehentkoppelt vom Lenkrad. In diesem Fall bleibt der Lenkrad-Airbag stets in seiner optimalen Ausrichtung, und zwar unabhängig von der aktuellen Drehposition des Lenkrads.

Hierbei ist zwar stets eine optimale Ausrichtung des Lenkrad-Airbags gewährleistet. Jedoch ist zwischen dem drehbaren Lenkrad und dem drehfesten Lenkradairbagmodul eine konstruktiv aufwendige Drehlagerung vorzusehen.

Zudem sind sogenannte Steer-by-wire-Lenksysteme bekannt, bei denen keine mechanische Verbindung zwischen dem Lenkrad und dem Lenkgetriebe erforderlich ist. Bei einem solchen Lenksystem ist eine vollständige elektronische Kraft- und Wegansteuerung von sowohl dem Lenkrad als aus dem gelenkten Fahrzeugrädern realisierbar. Hierzu hat das Lenksystem unter anderem einen Lenksensor, der die Drehpositon und/oder eine Drehbetätigung des Lenkrads als ein Lenkbefehl erfasst. Zudem ist ein Steuergerät vorgesehen, mit dem in Abhängigkeit vom Lenkbefehl ein elektromechanischer Aktor elektrisch ansteuerbar ist, um den jeweiligen Lenkwinkel der gelenkten Fahrzeugräder einzustellen. Darüberhinaus weist das Lenksystem einen weiteren elektromechanischen Aktor auf, mit dem eine Kraft-/Wegansteuerung des Lenkrads erfolgt, um den Fahrer eine haptische Rückmeldung von zum Beispiel dem vorgenommenen Lenkvorgang bereitzustellen.

Aus der JP 2005 112130 A ist eine gattungsgemäße Insassenschutzvorrichtung mit einem Lenkradairbagmodul bekannt. Dabei ist eine Stelleinheit vorgesehen, mit der bei unverändertem Lenkwinkel der Fahrzeugräder das Lenkrad von einer Drehstellung in eine Neutralstellung drehbar ist, die identisch mit einer Geradeausfahrt-Stellung des Lenkrads ist.

Die US 2013/0038044 A1 und die nachveröffentlichte EP 2 857 283 A1 beschreiben ebenfalls jeweils eine Insassenschutzvorrichtung mit einer Stelleinheit, die ein Lenkrad bei einem Crashfall in eine Neutralstellung bewegt.

Die DE 10 2012 017 680 A1 zeigt eine Insassenschutzvorrichtung, bei der im Crashfall der Lenkradwinkel eines Lenkrads auf einen vorbestimmten Soll-Lenkradwinkel eingestellt wird. Der Soll-Lenkradwinkel liegt dabei beispielsweise in einem Bereich von 20° oder 10°.

Die Aufgabe der Erfindung besteht darin, eine Insassenschutzvorrichtung für ein Fahrzeug bereitzustellen, bei der in konstruktiv einfacher Weise unabhängig von dem aktuell vom Lenkrad eingestellten Fahrzeugrad-Lenkwinkel stets eine optimale Ausrichtung des Lenkrad-Airbags ermöglicht ist.

Die Aufgabe ist durch die Merkmale des Patentanspruches 1 oder des Patentanspruches 9 gelöst. Bevorzugte Weiterbildungen der Erfindung sind in den Unteransprüchen offenbart.

Gemäß dem Patentanspruch 1 weist die Insassenschutzvorrichtung eine Stelleinheit auf, mit der bei unverändertem Lenkwinkel der gelenkten Fahrzeugräder das Lenkrad in eine Crashposition drehbar ist, bei der der Airbag gegenüber der Fahrer-Position optimal ausgerichtet ist. Das heißt, dass das Lenkrad im Crashfall kurzfristig in die Crashposition vordefinierter Drehlage gedreht wird. Die Drehung des Lenkrades erfolgt dabei ohne Beeinflussung der Lenkung. Auf diese Weise ist in konstruktiv einfacher Weise gewährleistet, dass im Crashfall stets eine optimale Stützfunktion des Lenkrad-Airbags ermöglicht ist.

Beispielhaft wird das Lenkrad im Crashfall in einem definierten Zeitbereich kurz vor oder nach dem Crashzeitpunkt in eine Geradeausfahrt-Ausrichtung gedreht. Dabei wird nur das Lenkrad gedreht, und zwar ohne Beeinflussung der Lenkung.

In einer technischen Realisierung ist die hierzu erforderliche Stelleinheit sowie das Lenkrad Bestandteil eines Steer-by-wire-Lenksystems, bei dem ein Lenksensor einen fahrerseitigen Lenkbefehl erfasst und in Abhängigkeit von dem Lenkbefehl ein Steuergerät einen Aktor elektrisch ansteuert, um dem fahrerseitig gewünschten Lenkwinkel der gelenkten Fahrzeugräder einzustellen. In dem Steer-by-wire-Lenksystem erfolgt mittels der erfindungsgemäßen Stelleinheit eine Kraft-Weg-Ansteuerung des Lenkrads, um den Fahrer eine haptische Rückmeldung zu vermittelt. Das heißt, dass im normalen Fahrbetrieb die Stelleinheit die haptische Rückmeldung veranlasst und im Crashfall die Stelleinheit das Lenkrad in die Crashposition verstellt.

Optional kann die Drehung in die Crashposition auch über einen zusätzlichen Antrieb, wie etwa einem Federelement oder dergleichen, erzeugt werden. Wie oben angegeben, ist dem Steer-by-wire-Lenksystem ein Lenksensor zugeordnet. Alternativ dazu kann die Sensierung der Lenkradposition je nach Ausführung auch von der Stelleinheit selbst erfolgen. Im Steuergerät koordiniert, eine Recheneinheit die erforderliche Drehbetätigung des Lenkrades in die Crashposition, in der der Lenkrad-Airbag optimal ausgerichtet ist.

In einer nicht von der Erfindung umfassten, technischen Realisierung kann die Crashposition des Lenkrads identisch mit dessen Geradeausfahrt-Stellung sein. Im Crashfall verstellt daher die Stelleinheit das Lenkrad, bei unbeeinflusstem Lenkwinkel der Fahrzeugräder, in die Geradeausfahrt-Stellung.

Erfindungsgemäß ist dem Steuergerät zusätzlich ein Sensorelement zugeordnet, mit dem eine Ist-Fahrerposition erfassbar ist, etwa eine Kamera. In diesem Fall steht das Steuergerät in Abhängigkeit von der erfassten Ist-Fahrerposition die Lenkrad-Crashposition fest, die beispielhaft auch unterschiedlich zur Geradeausfahrt-Stellung sein kann. Erhält beispielhaft das Steuergerät eine Information für einen Out-of-Position-Fall des Fahrers, so kann die Crashposition so festgelegt werden, dass der Lenkrad-Airbag im Hinblick auf die Out-of-Position-Lage des Fahrers ausgerichtet ist. Beispielhaft kann der Fahrer in einer Out-of-Position-Lage mit seinem Oberkörper in Richtung auf die Mittelkonsole verlagert sein. In der vorliegenden Anmeldung ist unter einer solchen Out-of-Position-Lage der Sachverhalt zu verstehen, dass sich der Fahrzeuginsasse nicht in seiner üblichen/nicht vorgesehenen Position befindet.

Das Steuergerät kann mit einer Precrashsensorik in Signalverbindung sein. Bei Erfassung eines Precrashsignals kann die dem Steuergerät zugeordnete Stelleinheit das Lenkrad in die Crashposition verstellen. Nach erfolgter Durchführung dieses Stellvorgangs wird der Airbag aktiviert, das heißt gezündet und entfaltet. Im Hinblick auf eine weitere Steigerung der Fahrer-Sicherheit ist es von Vorteil, wenn während der Airbag-Aktivierung die Stelleinheit das Lenkrad in seiner Crashposition blockiert. D.h., eine Drehung des Lenkrades wird sowohl während der Airbag-Entfaltung als auch während der Eintauchphase des Fahrers in den Airbag verhindert. Wie oben erwähnt, erfolgt der Lenkrad-Stellvorgang sowie die Airbag-Aktivierung in der, dem Crashzeitpunkt vorgelagerten Precrashphase. Der Lenkrad-Stellvorgang ist dabei, bevorzugt ohne zeitliche Überlappung, der Airbagaktivierung zeitlich vorgelagert.

Zur weiteren Steigerung der Fahrer-Sicherheit im Crashfall kann dem Steuergerät ein Sensorelement zugeordnet sein, mit dem während des crashbedingten Lenkrad-Stellvorgangs ein Lenkradeingriff des Fahrers ermittelbar ist. Liegt ein solcher Lenkradeingriff vor, so kann gegebenenfalls die Stelleinheit den Stellvorgang abbrechen. Das hierzu erforderliche Sensorelement kann beispielhaft eine Kamera oder ein Feuchtigkeitssensor sein, mit dem ein Fahrerkontakt mit dem Lenkrad ermittelbar ist. Alternativ oder zusätzlich dazu kann das Sensorelement eine Kraftmesseinheit sein, die beim Verstellvorgang eine auf das Lenkrad aufgebrachte Widerstandskraft erfasst.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Prinzipdarstellung einen Versuchsaufbau zur Simulation eines Fahrzeugcrashs mit den in einem Blockschaltbild dargestellten Programmbausteinen der Insassenschutzvorrichtung;
- Fig. 2 und 3: jeweils Anrichten entsprechend der Fig. 1, in denen eine Precrashphase angedeutet ist;
- Fig. 4: ein Zeitdiagramm zur Veranschaulichung einer beispielhaften Precrashphase; und
- Fig. 5: in einer Ansicht entsprechend der Fig. 3 ein Ausführungsbeispiel der Erfindung.

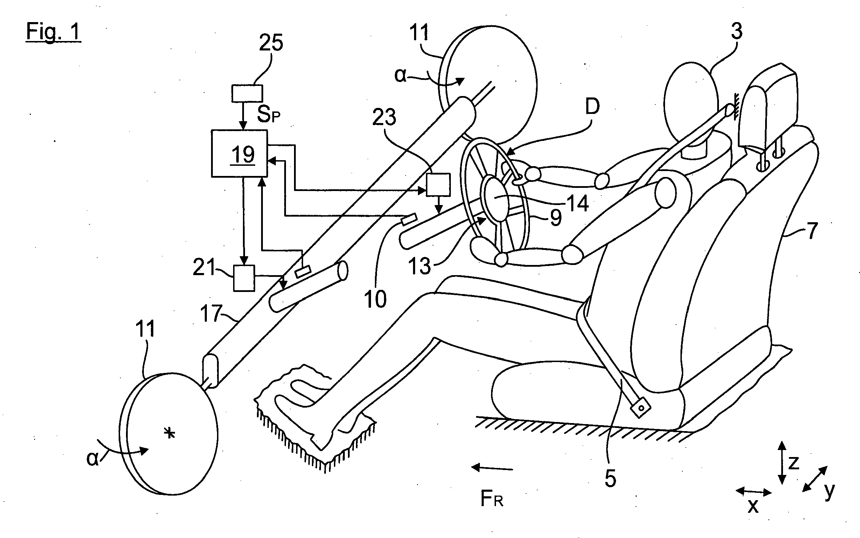

In der Fig. 1 ist grob vereinfacht ein Versuchsaufbau zur Simulation eines Fahrzeugcrashs insoweit dargestellt, als es für das Verständnis der Erfindung erforderlich ist. Demzufolge ist in einem Fahrzeuginnenraum 1 eines nicht näher gezeigten Fahrzeugs ein, den Fahrer simulierender Dummy 3 mit angelegtem Sicherheitsgurt 5 auf einem Fahrersitz 7 positioniert. Der Dummy 3 ist im Eingriff mit einem Fahrzeug-Lenkrad 9 dargestellt. In der Fig. 1 ist eine Fahrbetriebssituation nachgebildet, in der der Fahrer 3 das Lenkrad 9 in eine Drehposition D betätigt hat, in der die Fahrzeugräder 11 um einen Lenkwinkel a nach links eingeschlagen sind.

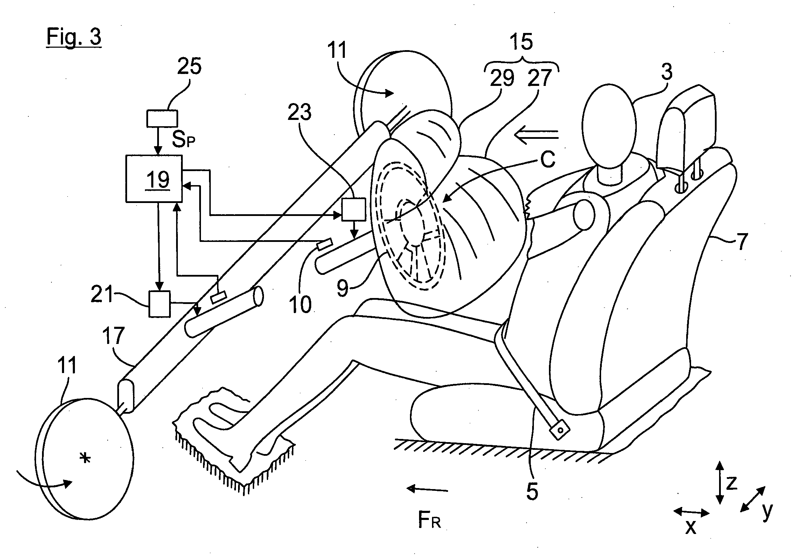

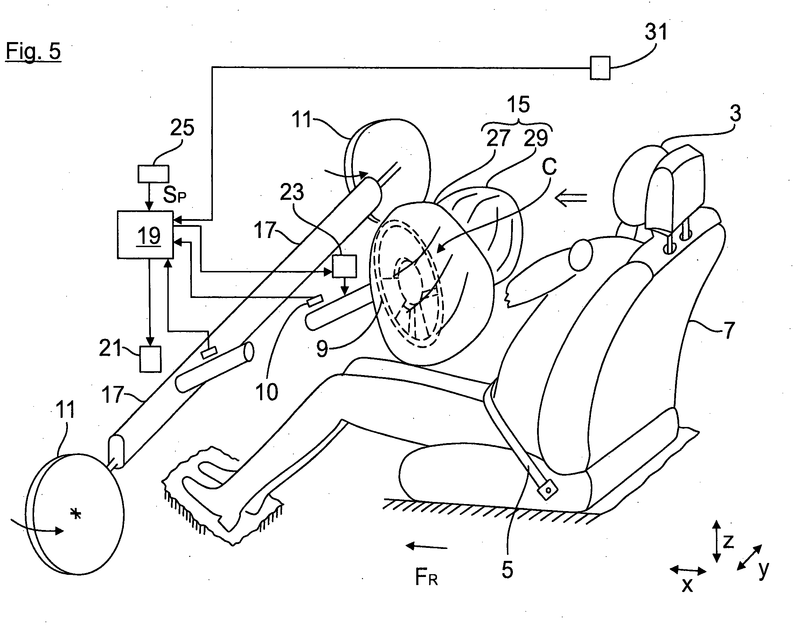

Im Nabenbereich 13 des Lenkrads 9 ist ein Lenkradairbagmodul eingebaut, dessen Airbag 15 (Fig. 3 oder 5) im Normalbetrieb von einem Airbagdeckel 14 überdeckt ist und im Crashfall zwischen dem Fahrer 3 und dem Lenkrad 9 entfaltbar ist. Das Lenkradairbagmodul ist zusammen mit dem Airbag 15 drehgekoppelt mit dem Lenkrad 9 eingebaut.

Das Lenkrad 9 ist im vorliegenden Ausführungsbeispiel Bestandteil eines Steer-by-wire-Lenksystems, bei dem auf eine mechanische Verbindung zwischen dem Lenkrad 9 und einem mit den Fahrzeugrädern 11 gekoppelten Lenkgetriebe 17 verzichtet ist. Anstelle einer solchen mechanischen Verbindung werden im Lenksystem Lenkbefehle des Fahrers 3 in einem Steuergerät 19 verarbeitet, das in Abhängigkeit davon einen Aktor 21 elektrisch ansteuert. Der Aktor 21 ist in der Fig. 1 in nicht dargestellter trieblicher Verbindung mit dem Lenkgetriebe 17, um eine fahrerseitig gewünschte Einstellung des Lenkwinkels α der gelenkten Fahrzeugräder 11 durchzuführen. Dem Steuergerät 19 ist ein Lenksensor 10 zugeordnet, der die Drehposition D (und/oder eine Drehbetätigung in die Drehposition D) des Lenkrads 9 als einen Lenkbefehl erfasst. In Abhängigkeit von dem erfassten Lenkbefehl wird der oben erwähnte Aktor 21 angesteuert. Zudem ist dem Steuergerät 19 eine Stelleinheit 23 zugeordnet, mit der eine Kraft-/Wegansteuerung des Lenkrads 9 durchführbar ist. Mit Hilfe der Stelleinheit 23 wird dem Fahrer 3 über das Lenkrad 9 eine haptische Rückmeldung über zum Beispiel den Lenkvorgang bereitgestellt.

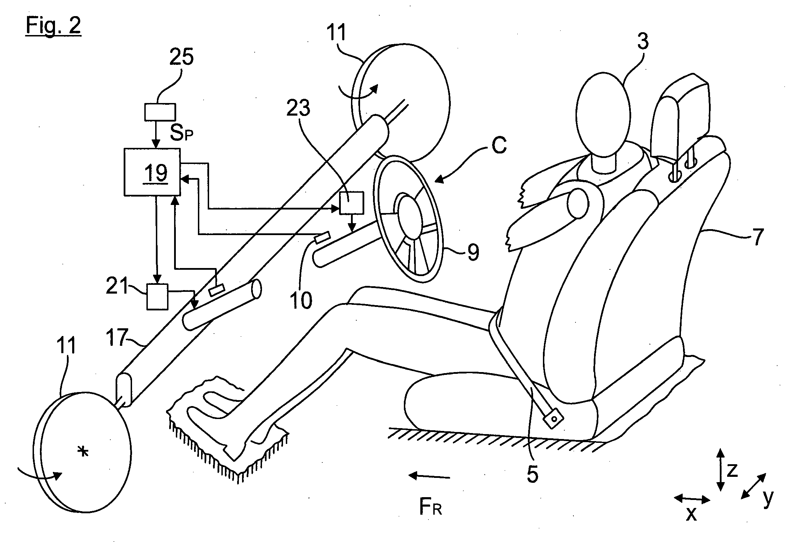

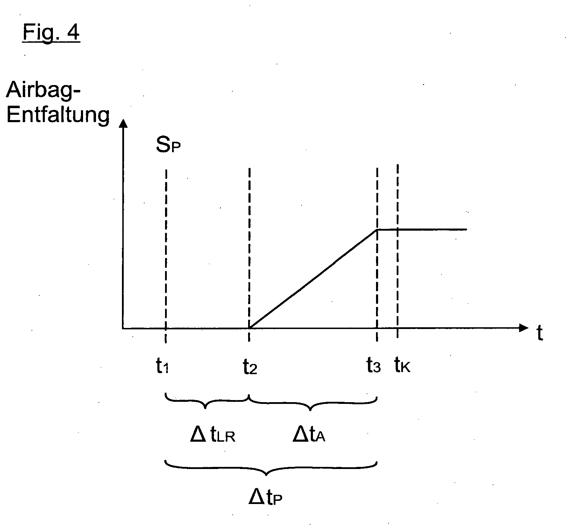

Nachfolgend wird anhand der Fig. 1 bis 4 eine von der Insassenschutzvorrichtung durchgeführte Precrashphase Δt_{P} beschrieben, die im Zeitdiagramm der Fig. 4 veranschaulicht ist. Wie aus der Fig. 4 hervorgeht, ist die Precrashphase Δt_{P} in einen Lenkrad-Stellvorgang Δt_{LR} und in eine zeitlich nachgelagerte Airbag-Aktivierung Δt_{A} aufgeteilt, die ohne zeitliche Überlappung erfolgen. Der Lenkrad-Stellvorgang Δt_{LR} wird zu einem Zeitpunkt t₁ gestartet, und zwar durch ein von einer Precrashsensorik 25 generiertes Precrashsignal S_{P}, das zum Steuergerät 19 geleitet wird. Hierbei wird die Stelleinheit 23 so angesteuert, dass sich das Lenkrad 9 von der aktuellen Drehposition D (Fig. 1) in eine Crashposition C verstellt, in der der Lenkrad-Airbag 15 gegenüber der Fahrer-Position optimal ausgerichtet ist. Beispielhaft ist in der Fig. 1 das Lenkrad 9 in der Drehposition D nach links gedreht, wodurch auch die gelenkten Fahrzeugräder 11 mit einem Lenkwinkel α nach links eingeschlagen sind. Demgegenüber ist in der Fig. 2 die Precrashphase Δt_{P} im Zeitpunkt t₂ gezeigt, bei der sich das Lenkrad 9 bereits in seiner Crashposition C befindet, die hier beispielhaft identisch ist mit einer Geradeausfahrt-Stellung des Lenkrads 9. Die gelenkten Fahrzeugräder 11 sind dagegen nach wie vor mit unverändertem Lenkwinkel α nach links ausgelenkt, das heißt unbeeinflusst von dem Stellvorgang Δt_{LR} des Lenkrads 9.
Nach Abschluss des Lenkvorganges Δt_{LR} erfolgt zum Zeitpunkt t₂ die zeitlich nachgelagerte Airbagaktivierung Δt_{A}, bei der der Lenkrad-Airbag 15 gezündet wird und sich entfaltet. In der Fig. 3 ist der Lenkrad-Airbag 15 in seinem vollständig entfalteten Zustand gezeigt, d.h. zu einem Zeitpunkt t₃ unmittelbar vor dem Kollisionszeitpunkt t_{K}. Demzufolge ist der Lenkrad-Airbag 15 asymmetrisch ausgelegt, und zwar mit einem in der Fahrzeughochrichtung z unteren Thoraxabschnitt 27 und einem oberen Kopfabschnitt 29 für den Kopfaufprall des Fahrers 3. Während der Airbagaktivierung Δt_{A} blockiert die Stelleinheit 23 jegliche Drehbetätigung des Lenkrads 9, so dass das Lenkrad 9 zuverlässig in seiner Crashposition C verbleibt.

In den Fig. 2 und 3 ist die Crahsposition C des Lenkrads 9, die eine optimale Ausrichtung des Airbags 15 mit einer normalen Fahrerposition gewährleistet, bei der Geradeausfahrt-Stellung des Lenkrads 9 festgelegt. Demgegenüber ist im erfindungsgemäßen Ausführungsbeispiel der Fig. 5 die Crashposition C des Lenkrads 9 nicht auf die Geradeausfahrt-Stellung festgelegt, sondern kann vielmehr die Crashposition C einer aktuellen Fahrerposition angepasst werden. Hierzu weist das Steuergerät 19 ein zusätzliches Sensorelement 31, etwa eine Kamera, auf, mit der eine Ist-Fahrerposition des Fahrers 3 erfassbar ist. In der Fig. 5 befindet sich der Fahrer 3 beispielhaft in einer sogenannten Out-of-Position-Lage, bei der dessen Oberkörper in Richtung auf eine Mittelkonsole verlagert ist. Diese Fahrer-Position wird durch das Sensorelement 31 erfasst und ein entsprechendes Positionierungssignal zum Steuergerät 19 geleitet. Im Steuergerät 19 wird in Abhängigkeit von der erfassten Fahrerposition eine optimale Crashposition C des Lenkrades bestimmt. Im Anschluss daran erfolgt der Verstellvorgang Δt_{LR}, bei dem der Kopfabschnitt 29 des Airbags 15 nicht mehr in Fahrzeughochrichtung z in Flucht oberhalb des Thoraxabschnittes 27 angeordnet ist, sondern vielmehr in Übereinstimmung mit dem Fahrer-Oberkörper in Richtung Fahrzeuginnenseite geneigt ist.

Die Stelleinheit 23 kann zudem eine Kraftmesseinrichtung aufweisen, die eine beim Stellvorgang Δt_{LR} auf das Lenkrad 9 aufgebrachte Widerstandskraft erfasst. Überschreitet die Widerstandskraft einen vorgegebenen Schwellwert, so kann der Stellvorgang Δt_{LR} abgebrochen werden, um eine Beeinträchtigung des Fahrers 9 zu vermeiden.

## Patentansprüche

1. Insassenschutzvorrichtung für ein Fahrzeug, mit einem Lenkradairbagmodul, das in einem Nabenbereich (13) eines Fahrzeug-Lenkrads (9) angeordnet ist und dessen Airbag (15) im Crashfall zwischen dem Fahrer (3) und dem Lenkrad (9) entfaltbar ist, bei dessen Drehbetätigung in eine Drehposition (D) die gelenkten Fahrzeugräder (11) um einen Lenkwinkel (α) einschlagbar sind, wobei die Insassenschutzvorrichtung eine Stelleinheit (23) aufweist, mit der bei unverändertem Lenkwinkel (α) der Fahrzeugräder (11) das Lenkrad (9) von der Drehposition (D) in eine Crashposition (C) drehbar ist, in der der Airbag (15) gegenüber der Fahrer-Position ausgerichtet ist, **dadurch gekennzeichnet, dass** dem Steuergerät (19) ein Sensorelement (31) zur Erfassung einer Ist-Fahrerposition zugeordnet ist, und dass mittels des Steuergeräts (19) die Crashposition (C) des Lenkrads (9) bestimmbar ist, so dass in einem Out-of-Position-Fall die Drehwinkellage des Lenkrads (9) in Abhängigkeit von der Ist-Fahrerposition anpassbar ist.

2. Insassenschutzvorrichtung nach Anspruch 1, **dadurch gekennzeichnet, dass** das Lenkrad (9) Bestandteil eines Steer-by-wire-Lenksystems ist, und zwar mit einem Lenksensor (10), der eine Drehposition und/oder eine Drehbetätigung des Lenkrads (9) als einen Lenkbefehl erfasst, und mit einem Steuergerät (19), mit dem in Abhängigkeit vom Lenkbefehl ein Aktor (21) elektrisch ansteuerbar ist zur Einstellung des Lenkwinkels (α) der gelenkten Fahrzeugräder (11), und dass insbesondere mittels der Stelleinheit (23) eine Kraft-/Wegansteuerung des Lenkrads (9) durchführbar ist, mit der eine haptische Rückmeldung für den Fahrer (3) bereitstellbar ist.

3. Insassenschutzvorrichtung nach Anspruch 1 oder 2, **dadurch gekennzeichnet, dass** der Airbag (15) im entfalteten Zustand in asymmetrischer Form ausgelegt ist, und zwar insbesondere mit einem Thoraxabschnitt (27) und einem Kopfabschnitt (29).

4. Insassenschutzvorrichtung nach einem der vorhergehenden Ansprüche, **dadurch gekennzeichnet, dass** das Airbagmodul zusammen mit dem Airbag (15) mit dem Lenkrad (9) drehgekoppelt ist.

5. Insassenschutzvorrichtung nach einem der vorhergehenden Ansprüche, **dadurch gekennzeichnet, dass** das Steuergerät (19) mit einer Precrashsensorik (25) in Signalverbindung ist, und dass bei Generierung eines Precrashsignals (S_{P}) das Lenkrad (9) mittels der Stelleinheit (23) in die Crashposition (C) verstellbar ist, und/oder dass nach erfolgtem Stellvorgang (Δt_{LR}) eine zeitlich nachgelagerte Airbag-Aktivierung (Δt_{A}) durchführbar ist, wobei der Stellvorgang (Δt_{LR}) und die Airbag-Aktivierung (Δt_{A}) insbesondere ohne zeitliche Überlappung durchführbar sind.

6. Insassenschutzvorrichtung nach Anspruch 5, **dadurch gekennzeichnet, dass** während der Airbag-Aktivierung (Δt_{A}) das Lenkrad (9) mittels der Stelleinheit (23) in seiner Crashposition (C) blockiert ist.

7. Insassenschutzvorrichtung nach einem der vorhergehenden Ansprüche, **dadurch gekennzeichnet, dass** dem Steuergerät (19) ein Sensorelement zugeordnet ist, mit dem beim Verstellvorgang (Δt_{LR}) in die Crashposition (C) ermittelbar ist, ob ein Lenkradeingriff des Fahrers (3) vorliegt, und dass insbesondere bei Vorliegen eines Lenkradeingriffs die Stelleinheit (23) den Verstellvorgang (Δt_{LR}) abbricht.

8. Insassenschutzvorrichtung nach Anspruch 7, **dadurch gekennzeichnet, dass** das Sensorelement eine Kamera oder ein Feuchtigkeitssensor ist, mit deren Hilfe ein Kontakt des Fahrers (3) mit dem Lenkrad (9) ermittelbar ist, und/oder das Sensorelement eine Kraftmesseinheit ist, die eine beim Verstellvorgang (Δt_{LR}) auf das Lenkrad (9) aufgebrachte Widerstandskraft erfasst.

9. Verfahren zur crashbedingten Ansteuerung eines Fahrzeug-Lenkrads (9) mittels einer Insassenschutzvorrichtung nach einem der vorhergehenden Ansprüche.

## Claims

1. Occupant protection device for a vehicle, comprising a steering wheel airbag module arranged in a hub region (13) of a vehicle steering wheel (9), said airbag module having an airbag (15) configured for deployment between the driver (3) and the steering wheel (9) in the event of a crash, said steering wheel being used to steer the vehicle wheels (11) about a steering angle (α) when the steering wheel is turned to a rotary position (D), wherein the occupant protection device has an adjustment unit (23) with which the steering wheel (9) can be turned from the rotary position (D) to a crash position (C) while the steering angle (α) of the vehicle wheels (11) remains unchanged so as to align the airbag (15) with a posture of the driver, **characterised in that** a sensor element (31) is connected to the controller (19) to ascertain an actual posture of the driver, and that the crash position (C) of the steering wheel (9) can be determined by means of the controller (19) and consequently the rotation angle position of the steering wheel (9) is adjustable depending on the actual posture of the driver, when the posture of the driver is out-of-position.

2. Occupant protection device according to claim 1, **characterised in that** the steering wheel (9) is a component of a steer-by-wire steering system having a steering sensor (10) which registers a rotary position and/or a rotary actuation of the steering wheel (9) as a steering command, and having a controller (19) which electrically activates an actuator (21) as a function of the steering command to adjust the steering angle (α) of the steered vehicle wheels (11), and **in that** in particular by means of the adjustment unit (23), a force/path control of the steering wheel (9) can be executed which provides the driver (3) with haptic feedback.

3. Occupant protection device according to claim 1 or claim 2, **characterised in that** the airbag (15) has an asymmetric configuration when deployed, and in particular with a thorax portion (27) and a head portion (29).

4. Occupant protection device according to any one of the preceding claims **characterised in that** the airbag module together with the airbag (15) can be rotatably coupled with the steering wheel (9).

5. Occupant protection device according to any one of the preceding claims, **characterised in that** the controller (19) is connected to a pre-crash sensor mechanism (25) via a signal link, and **in that** when a pre-crash signal (S_{P}) is generated, the steering wheel (9) can be moved into the crash position (C) by means of the adjustment unit (23), and/or **in that** once the adjustment operation (Δt_{LR}) has concluded, subsequent airbag activation (Δt_{A}) can be executed, wherein the adjustment operation (Δt_{LR}) and the airbag activation (Δt_{A}) can be executed in particular with any overlap in time.

6. Occupant protection device according to claim 5, **characterised in that** the steering wheel (9) is locked in the crash position (C) thereof by means of the adjustment unit (23) during activation of the airbag (Δt_{A}).

7. Occupant protection device according to any one of the preceding claims, **characterised in that** a sensor element is connected to the controller (19) to determine the presence of a steering wheel intervention by the driver (3) upon execution of the adjustment operation (Δt_{LR}) into the crash position (C), and **in that** the adjustment unit (23) aborts the adjustment operation (Δt_{LR}) in particular in the presence of a steering wheel intervention.

8. Occupant protection device according to claim 7, **characterised in that** the sensor element is a camera or a humidity sensor to ascertain a contact of the driver (3) with the steering wheel (9), and/or the sensor element is a force measuring device for determining a resistance force upon the steering wheel (9) during the adjustment operation (Δt_{LR}

9. Method for activating a steering wheel (9) of a vehicle in the event of a crash by means of an occupant protection device according to any one of the preceding claims.

## Revendications

1. Dispositif de protection des passagers pour un véhicule, avec un module d'airbag de volant, qui est agencé dans une zone de moyeu (13) d'un volant de véhicule (9) et dont l'airbag (15) peut être déployé entre le conducteur (3) et le votant (9) lors d'une collision, dans lequel les roues de véhicule articulées (11) peuvent être braquées d'un angle de direction (α) lorsque le volant est actionné en rotation dans une position de rotation (D) et dans lequel le dispositif de protection des passagers comporte une unité de positionnement (23) avec laquelle, en présence d'un angle de direction (α) non modifié des roues de véhicule (11), le volant (9) peut être tourné de la position de rotation (D) à une position de collision (C) dans laquelle l'airbag (15) est orienté par rapport à la position du conducteur, **caractérisé en ce qu'un** élément capteur (31) destiné à la détection d'une position réelle du conducteur est associé à l'appareil de commande (19) et **en ce que**, au moyen de l'appareil de commande (19), la position de collision (C) du volant (9) peut être déterminée de telle sorte que, dans le cas d'une position anormale, la position angulaire du volant (9) peut être adaptée en fonction de la position réelle du conducteur.

2. Dispositif de protection des passagers selon la revendication 1, **caractérisé en ce que** le volant (9) fait partie d'un système de direction électrique du type à orientation par câbles, et ce avec un capteur de direction (10), qui détecte une position de rotation et/ou un actionnement de rotation du volant (9) comme une instruction de direction, et avec un appareil de commande (19), avec lequel un actionneur (21) peut être commandé de façon électrique en fonction de l'instruction de direction afin de régler l'angle de direction (α) des roues de véhicule articulées (11), et **en ce qu'**une commande de force et/ou de course du volant (9) peut être effectuée en particulier au moyen de l'unité de positionnement (23), commande avec laquelle un signal tactile est fourni en retour au conducteur (3).

3. Dispositif de protection des passagers selon la revendication 1 ou 2, **caractérisé en ce que** l'airbag (15) est conçu avec une forme asymétrique à l'état déployé, à savoir en particulier avec une partie (27) pour le thorax et une partie (29) pour la tête.

4. Dispositif de protection des passagers selon l'une des revendications précédentes, **caractérisé en ce que** le module d'airbag conjointement avec l'airbag (15) est solidaire en rotation avec le volant (9).

5. Dispositif de protection des passagers selon l'une des revendications précédentes, **caractérisé en ce que** l'appareil de commande (19) est en liaison au niveau des signaux avec un système capteur précollision (25) et **en ce que**, lors de la génération d'un signal de pré-collision (S_{P}), le volant (9) peut être déplacé au moyen de l'unité de positionnement (23) dans la position de collision (C) et/ou **en ce que**, une fois l'opération de positionnement (Δt_{LR}) effectuée, une activation d'airbag (Δt_{A}) chronologiquement postérieure peut être effectuée, l'opération de positionnement (Δt_{LR}) et l'activation d'airbag (Δt_{A}) pouvant notamment être effectuées sans chevauchement dans le temps.

6. Dispositif de protection des passagers selon la revendication 5, **caractérisé en ce que,** pendant l'activation d'airbag (Δt_{A}), le volant (9) est bloqué au moyen de l'unité de positionnement (23) dans sa position de collision (C).

7. Dispositif de protection des passagers selon l'une des revendications précédentes, **caractérisé en ce qu'un** élément capteur est associé à l'appareil de commande (19), élément capteur avec lequel on peut déterminer lors de l'opération de positionnement (Δt_{LR}) dans la position de collision (C) si une intervention du conducteur (3) sur le volant a lieu et **en ce que**, en présence d'une intervention sur le volant, l'unité de positionnement (23) interrompt l'opération de positionnement (Δt_{LR}).

8. Dispositif de protection des passagers selon la revendication 7, **caractérisé en ce que** l'élément capteur est une caméra ou un capteur d'humidité à l'aide duquel un contact du conducteur (3) avec le volant (9) peut être déterminé et/ou **en ce que** l'élément capteur est une unité de mesure de force qui détecte une force de résistance appliquée sur le volant (9) lors de l'opération de positionnement (Δt_{LR}).

9. Procédé pour la commande, conditionnée par une collision, d'un volant de véhicule (9) au moyen d'un dispositif de protection des passagers selon l'une des revendications précédentes.
